(19) Europäisches Patentamt
European Patent Office
Office européen des brevets

(11) **EP 1 987 645 B1**

(12) **FASCICULE DE BREVET EUROPEEN**

(45) Date de publication et mention
de la délivrance du brevet:
**03.10.2018 Bulletin 2018/40**

(21) Numéro de dépôt: **07731663.6**

(22) Date de dépôt: **23.02.2007**

(51) Int Cl.:
*H04L 27/26* (2006.01)    *H04L 1/00* (2006.01)

(86) Numéro de dépôt international:
**PCT/FR2007/050845**

(87) Numéro de publication internationale:
**WO 2007/099255 (07.09.2007 Gazette 2007/36)**

(54) **PROCEDE D'EMISSION AVEC ALLOCATION OPTIMALE DE PUISSANCE EMISE POUR EMETTEUR MULTI PORTEUSES**

SENDEVERFAHREN MIT OPTIMIERTER LEISTUNGSZUORDNUNG FÜR MEHRTRÄGERÜBERTRAGUNG

TRANSMISSION METHOD WITH OPTIMAL POWER ALLOCATION EMITTED FOR MULTICARRIER TRANSMITTER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.02.2006 FR 0650629**

(43) Date de publication de la demande:
**05.11.2008 Bulletin 2008/45**

(73) Titulaire: **3G Licensing S.A.**
**2132 Luxembourg (LU)**

(72) Inventeur: **BOCQUET, Wladimir**
**Tokyo, 135-0022 (JP)**

(74) Mandataire: **Camolese, Marco et al**
**Metroconsult S.r.l.**
**Via Sestriere 100**
**10060 None (TO) (IT)**

(56) Documents cités:
**EP-A- 1 207 662    US-A1- 2003 043 732**

• **MING LEI ET AL: "Subband bit and power loading for adaptive OFDM" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 octobre 2003 (2003-10-06), pages 1482-1486, XP010702474 ISBN: 0-7803-7954-3**

**Description**

La présente invention se rapporte de manière générale aux communications dites numériques, qui font partie du domaine des télécommunications. Les communications numériques comprennent en particulier les communications sans fil dont le canal de transmission est le canal aérien ainsi que les communications filaires. Au sein de ce domaine, l'invention se rapporte aux procédés d'émission et plus particulièrement aux techniques de transmission à porteuses multiples. Ces techniques comprennent en particulier les techniques du type OFDM (acronyme anglais de Orthogonal Frequency Division Multiplexed) ou du type OFDMA (acronyme anglais de Orthogonal Frequency Division Multiplexed Access).

Une caractéristique essentielle des techniques de transmission de type OFDM est de réduire le débit au niveau de chaque sous porteuse tout en fournissant un débit de transmission bits élevé en utilisant simultanément ces sous porteuses. La bande de fréquence est divisée en petites plages attribuées chacune respectivement aux différentes sous porteuses. Les sous porteuses sont orthogonales entre elles. Cette propriété est obtenue par un espacement entre sous porteuses multiple de l'inverse de la durée symbole. Un système à modulation multi porteuses peut permettre de fournir une immunité contre un évanouissement sélectif en fréquence intervenant lors de la transmission par le canal du fait que toutes les sous porteuses ne sont pas soumises simultanément à cet évanouissement. Toutefois, pour lutter contre ce phénomène d'évanouissement, le canal de transmission doit être estimé et corrigé pour chaque sous porteuse lors de la réception du signal transmis.

Un émetteur OFDM effectue plusieurs traitements sur les données binaires d'entrée haut débit pour générer un signal dit OFDM qui est transmis par le canal. Ainsi, les données binaires haut débit sont codées, par exemple avec un code convolutionnel, et modulées, par exemple par une modulation BPSK, QPSK ou 16QAM. Les données sont ensuite converties sous forme parallèle en plusieurs flux de données modulées bas débit pour alimenter des branches de sous porteuses d'un multiplexeur OFDM. Ce multiplex effectue un multiplexage par une division fréquentielle au moyen d'une transformée de Fourier discrète inverse à N points (IDFT). Le signal OFDM résultant est converti sous forme analogique par un convertisseur numérique/analogique et converti par un convertisseur de fréquence (U/C) vers une bande radio fréquence (RF) pour émission vers le canal de transmission.

Typiquement, un système OFDM transmet N symboles pendant la i-ième période symbole OFDM sur N sous canaux déterminés par des sous porteuses espacées de 1/N. Pour le i-ième bloc, le signal OFDM en bande de base émis s'exprime sous la forme :

$$x_k^{(i)} = \frac{1}{\sqrt{N}} . \sum_{n=0}^{N-1} s_k^{(i)} . \exp\left\{ j\frac{2\pi nk}{N} \right\} \quad 0 \le k < N \tag{1}$$

expression dans laquelle N est la taille d'un bloc et $\vec{s}^{(i)}$ est la i-ième séquence symbole transmise.

Pour combattre l'interférence inter symboles (ou ISI acronyme anglais de Inter Symbol Interference) et l'interférence entre porteuses (ou ICI acronyme anglais de Inter Carrier Interference), un intervalle de garde (Guard Interval (GI)) tel qu'un préfixe cyclique (Cyclic Prefix (CP)) ou Zero Padding (ZP)) est ajouté à chaque symbole OFDM. Cet intervalle de garde permet de ne pas avoir de recouvrement entre symboles OFDM quand le retard de transmission est inférieur à la durée de cet intervalle. Dans le cas où l'intervalle de garde est une extension de la séquence de sortie, c'est-à-dire que son contenu est une recopie d'une partie de la séquence de sortie alors le signal émis s'exprime sous la forme :

$$\widetilde{x}_k^{(i)} = \begin{cases} x_{N-G+k}^{(i)} & 0 \le k < G \\ x_{k-G}^{(i)} & G \le k < N+G \end{cases} \tag{2}$$

expression dans laquelle G est la longueur de l'intervalle de garde.

En prenant comme hypothèse que le canal de transmission se compose de P trajets discrets caractérisés par une amplitude et un retard alors la réponse impulsionnelle en bande de base du canal peut s'exprimer sous la forme :

$$h(t,\tau) = \sum_{p=0}^{P-1} \alpha_p(t).\delta(\tau - \tau_p) \tag{3}$$

avec $\alpha_p$ et $\tau_p$ respectivement le gain complexe de canal et le retard du p-ième trajets dit délai d'étalement. La puissance totale transmise par le canal sur les différentes sous-porteuses est normalisée à 1.

Une autre hypothèse consiste à considérer que $\tau_{max}$=max $\tau_j$ < Tg=durée de l'intervalle de garde.

La fonction de transfert H(t,f) du canal peut s'exprimer dans le domaine fréquentiel sous la forme :

$$H(t,f) = \sum_{p=0}^{P-1} \alpha_p(t).\exp\left[-j2\pi f\tau_p\right] \tag{4}$$

A la réception, par un récepteur, le signal reçu est filtré par un filtre passe bande (BPF) et converti en bande de base (D/C). Le signal est échantillonné par un convertisseur analogique/numérique (A/D). Après suppression de l'intervalle de garde, les données échantillonnées alimentent une transformée de Fourier discrète (DFT) à N points et sont démultiplexées en autant de branches que de sous porteuses.

Si l'intervalle de garde est plus long que le retard maximum d'étalement alors le signal reçu en bande de base peut s'exprimer sous la forme :

$$r_k^{(i)} = \sum_{p=0}^{P-1} \alpha_p.x_{k-\tau_p}^{(i)} + \widetilde{n}_k^{(i)} \quad 0 \leq k < N \tag{5}$$

avec $\vec{r}^{(i)} = \left[r_0^{(i)}...r_{N-1}^{(i)}\right]$ et $\widetilde{n}^{(i)} = \left[\widetilde{n}_0^{(i)}...\widetilde{n}_{N-1}^{(i)}\right]$ respectivement le signal reçu et le bruit blanc Gaussien additionnel pour le i-ième symbole OFDM, après suppression de l'intervalle de garde et avant traitement.

Pour réduire les effets de distorsion du canal, il est connu de compenser le canal dans le domaine fréquentiel sous-porteuse par sous porteuse, en utilisant des coefficients déterminés selon en particulier un critère d'erreur quadratique minimale (MMSE) ou un critère d'égalisation à zéro (ZF). Ensuite, pour chaque branche les données sont démodulées et décodées. Cette compensation revient à multiplier le signal reçu par l'inverse du gain de canal, pour une sous-porteuse donnée. Cette méthode a pour inconvénient d'augmenter le niveau de bruit à la réception en particulier quand la valeur du gain du canal est faible, cette configuration se rencontrant typiquement en cas d'évanouissement.

The article "Subband Bit and Power Loading for Adaptive OFDM" by Ming Lei and Ping Zhang, Vehicular Technology Conférence, IEEE, 6.10.2003, pages 1482-1486, ISBN: 0-7803-7954-3, discloses a technique to optimize the orthogonal frequency division multiplexing (OFDM) performance especially in frequency selective fading channels. However, because every subcarrier may be allocated different number of bit or power, the signaling overhead may be too large to bear for systems with large number of subcarriers. The article discusses using the subband bit and power loading methods to decrease the signaling overhead. The article modifies Fischer's loading algorithm for subband bit and power loading, and groups the subcarriers into subbands by two means: one is based on successive subband grouping and the other one is based on sorted subband grouping.

US 2003/043732 discloses techniques to select transmission channels for use for data transmission and to process and transmit data over the selected transmission channels. Transmission channels available for use are segregated into one or more groups, with each group including any number of channels. With selective channel transmission, only "good" channels in each group are selected (e.g., based on the channels' received SNRs and an SNR threshold), "bad" channels are not used, and the total available transmit power for the group is (e.g., uniformly) distributed across only the good channels. Each group may also be associated with a respective coding and modulation scheme, and data for each group may be coded and modulated based on the scheme selected for the group. Improved performance is achieved by using only good channels in each group and matching the data processing for the selected channels to the capacity achievable by the channels.

EP 1207662 discloses that the transmission characteristics of subcarriers of a multicarrier transmission system (OFDM) using a plurality of antenna elements (antenna diversity) can be adjusted. Particularly the power and the phase of the subcarriers can be adapted. To this object the subcarrier frequency channel characteristics of the multicarrier transmission are detected at the side of the transmitter. The power of each subcarrier is then distributed by a weighting unit. The subcarriers can be further pre-equalized by dividing the subcarrier signal respectively by the sum of the squared magnitude of the frequency channel characteristics of all subcarrier signais or a frequency characteristic of the selected antenna element.

Ainsi, l'invention propose un procédé d'émission selon la revendication 1 et un émetteur selon la revendication 8. On effectue un multiplexage par division d'espace d'un signal à émettre sur N porteuses, le signal étant émis avec une puissance $P_u$ déterminée par porteuse, qui permette de lutter contre les phénomènes d'évanouissement sans augmenter le niveau du bruit sur le signal reçu.

Le procédé proposé est un procédé d'émission pour un système à au moins une antenne d'émission et au moins une antenne de réception séparées par un canal de transmission, qui effectue un multiplexage par division d'espace d'un signal à émettre sur plusieurs porteuses. Le signal est émis sur les différentes porteuses avec une puissance déterminée par porteuse. Le procédé répartit en sous-groupes un ensemble de porteuses prises parmi les N porteuses, selon un critère déterminé. Le procédé détermine un jeu de puissances émises par sous groupe de porteuses. Chaque jeu de puissances déterminées respecte une répartition fréquentielle optimale, entre les porteuses du jeu, de la puissance totale émise pour ce jeu. Ce jeu est déterminé en minimisant un critère d'erreur globale (BER, PER) sous contrainte que la somme des puissances déterminées d'un jeu est égale au produit du nombre de porteuses du sous groupe et de la puissance totale moyenne émise sur toutes les porteuses.

En recherchant un jeu de puissances émises qui permette de minimiser un critère d'erreur globale par sous-groupe de porteuses, typiquement un taux d'erreur bit globale, BER, un procédé selon l'invention prend en compte les conditions de propagation pour ajuster la puissance émise sur les différentes porteuses et permet par conséquent une distribution fréquentielle optimale de la puissance émise qui permet d'améliorer la lutte contre les phénomènes d'évanouissement et donc l'efficacité du système.

Le critère d'erreur globale qui est typiquement un BER (acronyme anglais de Bit Error Rate) peut tout aussi bien être un PER (acronyme anglais de Packet Error Rate) qui est un critère de mesure d'erreur couramment employé dans les systèmes mettant en oeuvre un codage de canal reposant par exemple sur un code convolutionnel, un turbo code ou un code LDPC. Dans ces systèmes dits codés, les deux critères d'erreur globale, BER et PER peuvent être utilisés.

Les variations du canal de propagation entre des sous-porteuses adjacentes sont généralement douces. Par suite, en cas d'évanouissement important, les variations associées du canal induisent une forte perturbation de sous-porteuses adjacentes.

Ainsi, les sous-porteuses les plus fortement affectées par une perturbation du canal, telle un évanouissement, sont regroupées avec les sous-porteuses les plus faiblement affectées. Une méthode pour évaluer l'impact de l'évanouissement dans le domaine fréquentiel consiste à calculer la puissance des coefficients du canal couramment notée $|H_m|^2$, avec m l'indice de la porteuse. Le critère de répartition des porteuses dans des sous-groupes est dans ce cas, le niveau de puissance des coefficients du canal.

D'autres caractéristiques et avantages de l'invention apparaîtront lors de la description qui suit faite en regard de figures annexées données à titre d'exemples non limitatifs.

La figure 1 est un schéma bloc d'un système de transmission avec transmission aérienne mettant en oeuvre un procédé selon l'invention.
La figure 2 est un organigramme d'un procédé selon l'invention.
La figure 3 est un organigramme d'un premier mode de réalisation d'un procédé selon l'invention.
La figure 4 est un organigramme d'un second mode de réalisation d'un procédé selon l'invention.
La figure 5 est un schéma bloc d'un système de transmission avec transmission aérienne mettant en oeuvre un mode particulier de réalisation du procédé selon l'invention.

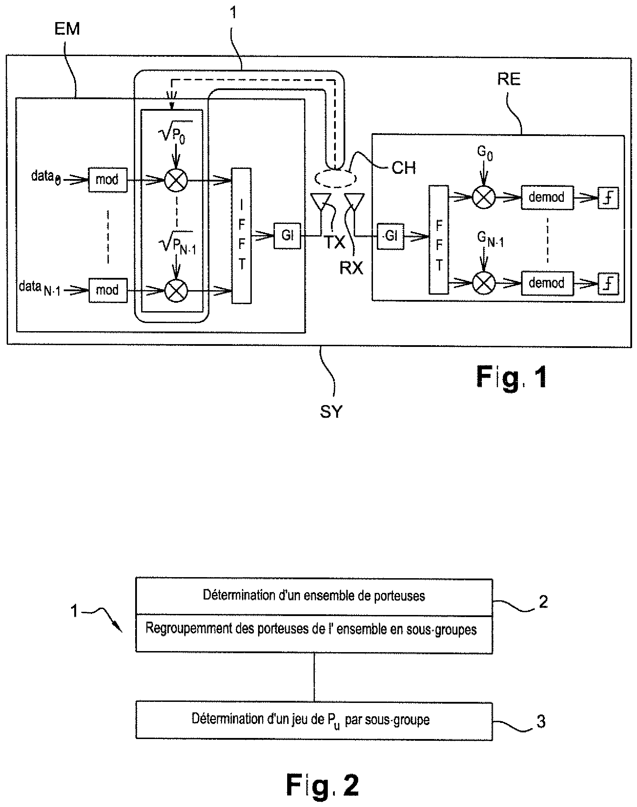

La figure 1 est un schéma d'un exemple d'un système SY de transmission mettant en oeuvre un procédé selon l'invention. Le système comprend un émetteur EM, des antennes d'émission TX, des antennes de réception RX et un récepteur RE. Les antennes d'émission et de réception sont séparées par un canal de transmission CH.

Le procédé 1 selon l'invention est schématisé par une boucle de retour et des coefficients de pondération du signal émis par sous-porteuse. Le procédé effectue une optimisation de la répartition de puissance émise par sous-porteuse en se basant sur une connaissance des conditions de transmission du canal. La boucle de retour permet de prendre en compte dans l'expression du critère d'erreur global une information d'état du canal, CSI ou Channel State Information. La boucle de retour est une illustration de l'exploitation des symboles pilotes qui permettent de déterminer selon des techniques connues de l'homme du métier les caractéristiques du canal, en particulier la fonction de transfert du canal. En fonction du mode de transmission, par exemple de type FDD ou TDD, la connaissance de $H_m$ par l'émetteur nécessite ou pas une remontée d'information du récepteur vers l'émetteur.

Ainsi, cette exploitation permet de connaître le module et la phase des coefficients du canal :

$$H_m = \left|H_m\right|e^{j\varphi} \tag{6}$$

La figure 2 est un organigramme d'un procédé selon l'invention.

Le procédé 1 est un procédé d'émission qui effectue un multiplexage par division fréquentielle d'un signal à émettre sur N porteuses. Le signal est émis avec une puissance $P_u$ déterminée par porteuse.

Dans une première étape 2, le procédé répartit en sous-groupes un ensemble de porteuses prises parmi les N porteuses, selon un critère déterminé.

Le critère est typiquement un niveau de puissance des coefficients $|H_m|^2$ du canal de transmission.

Dans une deuxième étape 3 successive ou imbriquée avec l'étape précédente, le procédé détermine un jeu de puissances émises par sous groupe.

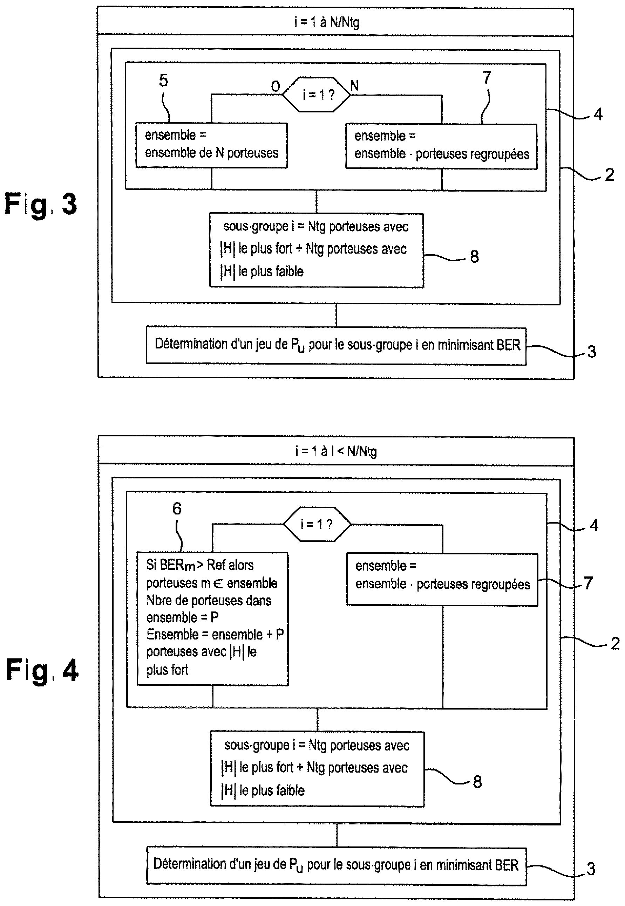

Le procédé est décrit de manière plus détaillée en regard des figures 3 et 4 qui représentent un organigramme détaillé respectivement d'un premier et d'un second modes de réalisation d'un procédé selon l'invention.

Selon ces modes de réalisation, les premières 2 et deuxième 3 étapes sont réitérées un certain nombre de fois.

La première étape 2 se décompose en une première sous-étape et une seconde sous-étape.

Dans une première sous-étape 4, le procédé détermine un ensemble de porteuses.

Selon le premier mode de réalisation, pour la première itération, cet ensemble est constitué 5 des N sous-porteuses.

Selon le second mode de réalisation, pour la première itération, cet ensemble est constitué 6 d'un sous-ensemble de l'ensemble des N porteuses. Ce sous-ensemble comprend les sous-porteuses les plus perturbées par le canal et celles les moins perturbées et en nombre égal aux précédentes. La sélection des porteuses les plus perturbées est faite en retenant les sous porteuses pour lesquelles la valeur du critère d'erreur obtenue est supérieure à une valeur de référence.

La description suivante de ce second mode est faite en regard de l'exemple particulier selon lequel le critère d'erreur global est le taux d'erreur binaire, BER. Dans ce cas, le mode repose sur l'hypothèse que le taux d'erreur binaire associé à une sous-porteuse m, $BER_m$, peut être estimé par l'équation :

$$BER_m \approx a.\exp(-b.\beta_m.p_m/(M-1)) \tag{7}$$

dans laquelle

$$\beta_m = \frac{1}{\sigma_n^2 . |G_m|^2} \tag{8}$$

$M = 2^{Nm}$, le jeu de modulation sachant que Nm est le nombre de bits par symbole, $G_m$ la valeur de compensation de canal due à un évanouissement fréquentiel sélectif sur la fréquence m, a=0,1 un premier coefficient heuristique, b=3,0 un second coefficient heuristique. Dans le cas d'une égalisation zéro-forcing, la relation entre Hm et Gm devient égale à :

$$G_m = \frac{H_m^*}{|H_m|^2}$$

où * est la valeur conjuguée.

et dans le cas d'une égalisation MMSE (minimum mean square error), la relation entre Hm et Gm devient égale à :

$$G_m = \frac{H_m^*}{|H_m|^2 + \sigma_n^2}$$

où $\sigma_n^2$ représente la variance du bruit.

Ainsi, pour comparer le taux d'erreur binaire obtenue pour une sous-porteuse à une valeur de référence, il suffit de comparer la valeur du $\beta_m$ obtenue pour cette sous-porteuse à une valeur seuil de $\beta$ qui correspond à la valeur de référence du BER, en prenant comme approximation que $p_m$ est la puissance émise sur la sous-porteuse m Par exemple, le BER de référence est égal à $10^{-4}$. Ainsi, pour déterminer le sous-ensemble, le procédé compare pour les différentes sous-porteuses la valeur de $\beta_m$ associée à la sous-porteuse à une valeur seuil. Le procédé sélectionne les sous-porteuses pour lesquelles le $\beta_m$ est supérieur à la valeur seuil, c'est-à-dire les sous-porteuses qui conduisent à un taux d'erreur binaire supérieur au taux de référence. Cette sélection est complétée avec un nombre identique de sous-porteuses présentant les meilleures valeurs de $\beta_m$ et donc le taux d'erreur binaire le plus faible. Ce second mode a pour avantage d'être moins complexe que le premier mode car la détermination de puissances émises n'est effectuée que pour certaines sous-porteuses.

Pour chacun des deux modes, pour les itérations suivantes, l'ensemble de porteuses est réduit 7 des sous-porteuses regroupées lors de l'itération précédente.

Dans une seconde sous-étape 8, lors de l'itération i, le procédé regroupe dans un i-ième sous-groupe de taille $N_{tg}$, les $N_{tg}/2$ sous-porteuses pour lesquelles le gain de canal est le plus fort avec les $N_{tg}/2$ sous-porteuses pour lesquelles le gain de canal est le plus faible.

Le nombre d'itérations du processus est typiquement égal à $N/N_{tg}$ dans le cas du premier mode. Ce premier mode suppose que la contrainte suivante est remplie : *N* mod *uloNtg* = 0, ce qui revient à dire que N/Ntg=k avec k un entier naturel. Dans le cas du second mode, le nombre I d'itérations est inférieur à N/Ntg.

Dans la deuxième étape 3, successive ou imbriquée avec l'étape précédente, le procédé détermine un jeu de puissances émises par sous groupe. Le jeu de puissances déterminées respecte une répartition fréquentielle optimale entre les sous-porteuses du jeu, de la puissance totale émise pour ce jeu. Cette répartition optimale est obtenue en minimisant un critère d'erreur globale, sous contrainte que la somme des puissances du jeu d'un sous-groupe soit égale au produit du nombre $N_{tg}$ de porteuses du sous groupe et de la puissance totale moyenne $\overline{P}$ émise sur les N sous porteuses. La contrainte s'exprime sous la forme :

$$\sum_{m=0}^{N_{tg}-1} p_m = N_{tg}.\overline{P} \qquad (9)$$

Expression dans laquelle $N_{tg}$, $p_m$ sont respectivement la taille du sous-groupe pour lequel la minimisation est effectuée et la puissance allouée à la sous-porteuse m du sous-groupe.

Le critère d'erreur global est typiquement le taux d'erreur binaire, BER. Le taux d'erreur binaire BER est une fonction du rapport signal sur bruit, SNR. Dans un canal avec évanouissement plat, ce taux peut s'exprimer comme une fonction de la puissance émise $p_m$ par sous-porteuse m et d'un coefficient $\beta_m$ :

$$BER = f\left(\beta_m, p_m\right) \qquad (10)$$

avec $\beta_m$ déterminé par l'équation (8).

Le taux d'erreur binaire, BER, devient minimal quand il est minimisé pour chaque sous-bande fréquentielle correspondant à une sous-porteuse. Pour déterminer la valeur minimale une solution consiste à utiliser un algorithme à Lagrangien.

La minimisation peut s'exprimer de la manière suivante :

$$\min\ f\left(\beta_m, p_m\right)$$
$$avec\ \sum_{m=0}^{N_{tg}-1} p_m = N_{tg}.\overline{P} \qquad (11)$$

L'équation (11) est une traduction du fait que le procédé minimise le BER en déterminant le meilleur jeu de puissances émises sous la contrainte que la puissance émise totale sur l'ensemble des $N_{tg}$ sous-porteuses doit être constante et fixée.

La résolution des équations (11) peut être effectuée en mettant en oeuvre un algorithme à Lagrangien. Pour chaque sous-groupe de sous-porteuses, le Lagrangien peut s'exprimer sous la forme :

$$J\left(p_0, ...., p_{N_{tg}-1}\right) = \frac{1}{N_{tg}} \sum_{m=0}^{N_{tg}-1} f\left(\beta_m, p_m\right) + \lambda\left(\sum_{m=0}^{N_{tg}-1} p_m - N_{tg}.\overline{P}\right) \qquad (12)$$

Pour obtenir un jeu de puissances émises optimal, le procédé résout le système d'équations suivant :

$$\begin{cases} \dfrac{1}{N_{tg}} \cdot \dfrac{\partial}{\partial p_m} \left( \sum_{m=0}^{N_{tg}-1} f\left(\beta_m, p_m\right) \right) + \lambda = 0 \quad m = 0, \dots, N_{tg} - 1 \\[4mm] \sum_{m=0}^{N_{tg}-1} p_m - N_{tg} \cdot \overline{P} = 0 \end{cases} \tag{13}$$

En introduisant l'estimation simplifiée du BER donnée par l'équation (7) le système (13) peut s'exprimer sous la forme :

$$\begin{cases} \dfrac{-a.b.\beta_m}{M-1} \cdot \exp\left( -b \cdot \dfrac{\beta_m \cdot p_m}{M-1} \right) + \lambda = 0 \quad m = 0, \dots, N_{tg} - 1 \\[4mm] \sum_{m=0}^{N_{tg}-1} p_m - N_{tg} \cdot \overline{P} = 0 \end{cases} \tag{14}$$

Ce qui conduit à l'expression suivante pour la puissance émise déterminée pour une sous-porteuse :

$$p_u = \left[ 1 + \sum_{\substack{m=0 \\ m \neq l}}^{N_{tg}-1} \frac{\beta_u}{\beta_m} \right]^{-1} \cdot \left( N_{tg} \cdot \overline{P} + \frac{1}{b} \cdot \sum_{\substack{m=0 \\ m \neq l}}^{N_{tg}-1} \frac{1}{\beta_m} \cdot \ln\left( \frac{\beta_u}{\beta_m} \right) \right) \tag{15}$$

Le procédé prend en compte une contrainte supplémentaire dans le cas où la mise en oeuvre d'un algorithme à Lagrangien conduit à une solution qui n'a pas de réalité physique, typiquement, quand la puissance obtenue est négative. Dans ce cas, le procédé peut supprimer la sous-porteuse de l'ensemble des sous-porteuses.

Dans le cas du premier mode de réalisation décrit, le procédé détermine une puissance émise pour chaque sous-porteuse de chaque sous-groupe en minimisant un critère d'erreur global.

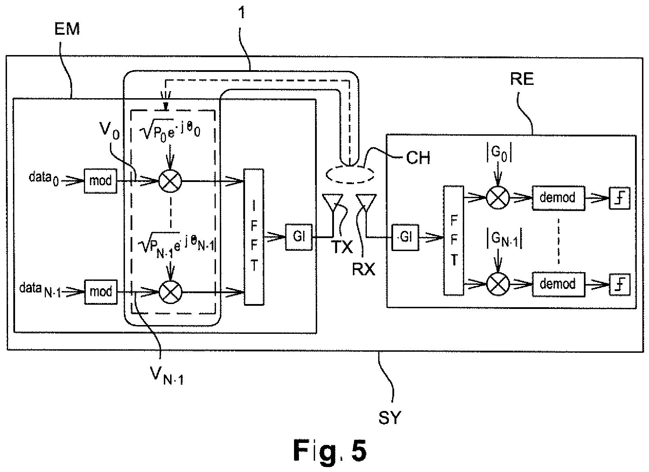

La figure 5 est un schéma bloc d'un système de transmission avec transmission aérienne mettant en oeuvre un mode particulier de réalisation du procédé selon l'invention. Les éléments de la figure 5 identiques à ceux de la figure 1 ont le même numéro de référence et ne sont pas décrits de nouveau.

Selon cette réalisation particulière, le procédé 1 d'émission compense à l'émission le déphasage $\varphi$ introduit par le canal. Ainsi, par sous-porteuse m, le signal $V_m$ à émettre est déphasé d'une valeur $-\varphi$ et pondéré de la racine de la valeur de puissance émise déterminée. Ceci peut s'exprimer par l'équation :

$$V_m \cdot \sqrt{p_m} \cdot e^{-j\varphi} \tag{16}$$

Un procédé selon l'invention peut être implémenté par différents moyens. Par exemple, le procédé peut être implémenté sous forme câblée (hardware), sous forme logicielle, ou par une combinaison des deux.

Pour une implémentation câblée, le module de détermination d'un jeu de puissance utilisé pour exécuter les différentes étapes au niveau de l'émetteur peut être intégré dans un ou plusieurs circuits intégrés spécifiques (ASICs), dans des processeurs de signaux (DSPs, DSPDs), dans des circuits logiques programmables (PLDs, FPGAs), dans des contrôleurs, micro- contrôleurs, microprocesseurs, ou tout autre composant électronique conçu pour exécuter les fonctions préalablement décrites.

Pour une implémentation logicielle, quelques unes ou toutes les étapes d'un procédé d'émission selon l'invention peuvent être implémentées par des modules logiciels qui exécutent les fonctions préalablement décrites. Le code logiciel peut être stocké dans une mémoire et exécuté par un processeur. La mémoire peut faire partie du processeur ou être externe au processeur et couplée à ce dernier par des moyens connus de l'homme de l'art.

En conséquence, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

En conséquence, l'invention a aussi pour objet un signal numérique destiné à être utilisé dans un émetteur effectuant un multiplexage par division fréquentielle d'un signal à émettre sur N sous porteuses, le signal étant émis avec une puissance $P_u$ déterminée par sous porteuse. Le signal numérique comprend au moins des codes pour l'exécution par l'émetteur des étapes suivantes :

- répartition en sous groupes d'un ensemble de sous porteuses prises parmi les N sous porteuses, selon un critère déterminé,
- détermination d'un jeu de puissances émises par sous groupe qui respecte une répartition fréquentielle optimale, entre les sous-porteuses du jeu, de la puissance totale émise pour ce jeu, en minimisant un critère d'erreur globale sous contrainte que la somme des puissances d'un jeu soit égale au produit du nombre $N_{tg}$ de sous porteuses du sous groupe et de la puissance totale moyenne émise sur les N sous porteuses.

## Revendications

1. Procédé (1) d'émission effectuant un multiplexage par division fréquentielle d'un signal à émettre sur N sous-porteuses, répartissant (2) en sous groupes un ensemble de sous-porteuses prises parmi les N sous-porteuses selon un niveau de puissance des coefficients d'un canal de transmission, déterminant (3) une puissance $P_u$ émise pour chaque sous-porteuse de chaque sous groupe de sorte que un jeu de puissances émises par sous groupe respecte une répartition fréquentielle optimale, entre les sous-porteuses du jeu, de la puissance totale émise pour ce jeu, en minimisant un critère d'erreur globale par sous-porteuse sous contrainte que la somme des puissances d'un jeu soit égale au produit du nombre $N_{tg}$ de sous-porteuses du sous groupe et de la puissance totale moyenne émise sur les N sous-porteuses, **caractérisé en ce que** dans la répartition en sous groupes les sous-porteuses les plus fortement affectées par une perturbation du canal sont regroupées avec les sous-porteuses les plus faiblement affectées.

2. Procédé (1) d'émission selon la revendication précédente, dans lequel le signal à émettre sur N sous-porteuses est émis par un émetteur (EM), transmis par un canal de transmission (CH) séparant l'émetteur et un récepteur (RE) du signal transmis, et dans lequel le signal $(V_0,...,V_{N-1})$ à émettre est déphasé d'une valeur de phase inverse du déphasage introduit par le canal de transmission.

3. Procédé (1) d'émission selon l'une des revendications précédentes, dans lequel l'ensemble de sous-porteuses est constitué (6) pour partie de sous-porteuses sélectionnées en fonction d'une valeur de référence du critère d'erreur global.

4. Procédé (1) d'émission selon l'une des revendications précédentes, dans lequel la minimisation du critère d'erreur globale est effectuée au moyen d'un algorithme à Lagrangien.

5. Procédé (1) d'émission selon l'une des revendications précédentes, dans lequel le critère d'erreur globale correspond à un taux d'erreur binaire, BER.

6. Procédé (1) d'émission selon la revendication précédente, dans lequel le taux d'erreur binaire est estimé par une fonction exponentielle pour obtenir une expression analytique de la puissance $P_u$ déterminée par sous-porteuse.

7. Procédé (1) d'émission selon l'une des revendications 1 à 4, dans lequel le critère d'erreur globale correspond à un taux d'erreur de packet globale, PER.

8. Emetteur (EM) effectuant un multiplexage par division fréquentielle d'un signal à émettre sur N sous porteuses, comprenant un module de répartition en sous groupes d'un ensemble de sous porteuses prises parmi les N sous-porteuses selon un niveau de puissance des coefficients d'un canal de transmission, une puissance $P_u$ étant émise pour chaque sous-porteuse de chaque sous groupe, ledit émetteur comprenant un module de détermination d'un jeu de puissances émises par sous groupe qui respecte une répartition fréquentielle optimale, entre les sous-porteuses du jeu, de la puissance totale émise pour ce jeu, en minimisant un critère d'erreur globale par sous-porteuse sous contrainte que la somme des puissances d'un jeu soit égale au produit du nombre $N_{tg}$ de sous-porteuses du sous groupe et de la puissance totale moyenne émise sur les N sous-porteuses, **caractérisé en ce que** dans la répartition en sous groupes les sous-porteuses les plus fortement affectées par une perturbation du canal sont regroupées par ledit module de répartition avec les sous-porteuses les plus faiblement affectées.

9. Emetteur (EM) selon la revendication précédente, dans lequel le signal à émettre sur N sous-porteuses est émis par ledit émetteur (EM), transmis par un canal de transmission (CH) séparant l'émetteur et un récepteur (RE) du signal transmis, et dans lequel le signal ($V_0$,...,$V_{N-1}$) à émettre est déphasé d'une valeur de phase inverse du déphasage introduit par le canal de transmission.

10. Emetteur (EM) selon la revendication 8 ou 9, dans lequel l'ensemble de sous-porteuses est constitué (6) pour partie de sous-porteuses sélectionnées en fonction d'une valeur de référence du critère d'erreur global.

11. Emetteur (EM) selon l'une des revendications 8 à 10, dans lequel la minimisation du critère d'erreur globale est effectuée au moyen d'un algorithme à Lagrangien.

12. Emetteur (EM) selon l'une des revendications 8 à 11, dans lequel le critère d'erreur globale correspond à un taux d'erreur binaire, BER.

13. Emetteur (EM) selon l'une des revendications 8 à 11, dans lequel le critère d'erreur globale correspond à un taux d'erreur de packet globale, PER.

14. Système (Sy) de transmission comprenant un émetteur (EM) selon l'une des revendications 8 à 13.

15. Programme d'ordinateur sur un support d'informations, ledit programme comportant des instructions de programme adaptées à la mise en oeuvre d'un procédé d'émission selon l'une quelconque des revendications 1 à 7, lorsque ledit programme est chargé et exécuté dans un émetteur.

**Patentansprüche**

1. Übertragungsverfahren (1) zum Durchführen eines Frequenzmultiplexierten Signals, das auf N Unterträgern übertragen werden soll, Aufteilen (2) eines Satzes von Unterträgern in Untergruppen, die unter den N Unterträgern gemäß einem Leistungspegel der Koeffizienten eines Übertragungskanals ausgewählt werden, Bestimmen (3) einer Leistung $P_u$, die für jeden Unterträger einer jeden Untergruppe übertragen wird, sodass ein Satz von durch Untergruppen abgebenden Leistungen eine optimale Frequenzverteilung, zwischen den Unterträgern des Satzes, der gesamten emittierten Leistung für diesen Satz sicherstellt, wobei ein globales Fehlerkriterium pro Unterträger unter der Bedingung minimiert wird, dass die Summe der Leistungen eines Satzes gleich dem Produkt aus der Anzahl $N_{tg}$ von Unterträgern der Untergruppe und der und der auf den N Unterträgern emittierten durchschnittlichen Gesamtleistung ist, **dadurch gekennzeichnet, dass** bei der Aufteilung in Untergruppen die Unterträger, die am stärksten von einer Kanalstörung betroffen sind, durch das Modul zum Aufteilen mit den am wenigsten betroffenen Unterträgern gruppiert werden.

2. Übertragungsverfahren (1) nach dem vorhergehenden Anspruch, wobei das auf N Unterträgern zu übertragende Signal von einem Emitter (EM) übertragen wird, das von einem Übertragungskanal (CH) übertragen wird, wobei der Übertragungskanal den Emitter und einen Empfänger (RE) vom übertragenen Signal trennt, und wobei das zu übertragende Signal ($V_0$,....,$V_{N-1}$) um einen inversen Phasenwert der durch den Übertragungskanal eingeleiteten Phasenverschiebung phasenverschoben wird.

3. Übertragungsverfahren (1) nach einem der vorhergehenden Ansprüche, wobei der Satz von Unterträgern (6) teilweise aus Unterträgern besteht, die nach einem Referenzwert des globalen Fehlerkriteriums ausgewählt werden.

4. Übertragungsverfahren (1) nach einem der vorhergehenden Ansprüche, wobei die Minimierung des globalen Fehlerkriteriums mittels eines Lagrange-Algorithmus durchgeführt wird.

5. Übertragungsverfahren (1) nach einem der vorhergehenden Ansprüche, wobei das globale Fehlerkriterium einer binären Fehlerrate, BER, entspricht.

6.  Übertragungsverfahren (1) nach einem der vorhergehenden Ansprüche, wobei die binäre Fehlerrate durch eine Exponentialfunktion geschätzt wird, um einen analytischen Ausdruck der durch einen Unterträger bestimmten Leistung $P_u$ zu erhalten.

7.  Übertragungsverfahren (1) nach einem der Ansprüche 1 bis 4, wobei das globale Fehlerkriterium einer globalen Paketfehlerrate, PER, entspricht.

8.  Emitter (EM), der eine Frequenzmultiplexierung eines auf N Unterträgern zu übertragenden Signals durchführt, umfassend einem Modul zum Aufteilen eines Satzes von Unterträgern in Untergruppen, die unter den N Unterträgern gemäß einem Leistungspegel der Koeffizienten eines Übertragungskanals ausgewählt werden, wobei für jeden Unterträger jeder Untergruppe eine Leistung $P_u$ übertragen wird, wobei der Emitter ein Modul zum Bestimmen eines Satzes von Leistungen aufweist, die von Untergruppen abgegeben werden, die eine optimale Frequenzverteilung sicherstellen, zwischen den Unterträgern des Satzes, der für diesen Satz emittierten Gesamtleistung, wobei ein globales Fehlerkriterium pro Unterträger unter der Bedingung minimiert wird, dass die Summe der Leistungen eines Satzes gleich dem Produkt aus der Anzahl $N_{tg}$ der Unterträger der Untergruppe und der auf den N Unterträgern emittierten durchschnittlichen Gesamtleistung ist, **dadurch gekennzeichnet, dass** bei der Aufteilung in Untergruppen die Unterträger, die am stärksten von einer Kanalstörung betroffen sind, durch das Modul zum Aufteilen mit den am wenigsten betroffenen Unterträgern gruppiert werden.

9.  Emitter (EM) nach dem vorhergehenden Anspruch, wobei das auf N Unterträgern zu übertragende Signal von einem Emitter (EM) übertragen wird, das von einem Übertragungskanal (CH) übertragen wird, wobei der Übertragungskanal den Emitter und einen Empfänger (RE) vom übertragenen Signal trennt, und wobei das zu übertragende Signal $(V_0,....,V_{N-1})$ um einen inversen Phasenwert der durch den Übertragungskanal eingeleiteten Phasenverschiebung phasenverschoben wird.

10. Emitter (EM) nach Anspruch 8 oder 9, wobei der Satz von Unterträgern (6) teilweise aus Unterträgern besteht, die nach einem Referenzwert des globalen Fehlerkriteriums ausgewählt sind.

11. Emitter (EM) nach einem der Ansprüche 8 bis 10, wobei die Minimierung des globalen Fehlerkriteriums mittels eines Lagrange-Algorithmus durchgeführt wird.

12. Emitter (EM) nach einem der Ansprüche 8 bis 11, wobei das globale Fehlerkriterium einer binären Fehlerrate, BER, entspricht.

13. Emitter (EM) nach einem der Ansprüche 8 bis 11, wobei das globale Fehlerkriterium einer globalen Paketfehlerrate, PER, entspricht.

14. Übertragungssystem (Sy) mit einem Emitter (EM) gemäß einem der Ansprüche 8 bis 13.

15. Computerprogramm auf einem Informationsträger, wobei das Programm Programmbefehle umfasst, die an die Durchführung eines Übertragungsverfahrens nach einem der Ansprüche 1 bis 7 angepasst sind, wenn das Programm in einem Emitter geladen und ausgeführt wird.

**Claims**

1.  A transmission method (1) for performing frequency-division multiplexing of a signal to be transmitted on N subcarriers, distributing (2) into subgroups a set of subcarriers taken from the N subcarriers according to a power level of the coefficients of a transmission channel, determining (3) a power $P_u$ emitted for each subcarrier in each subgroup such that a set of powers emitted per subgroup complies with an optimal frequency distribution, among the subcarriers in the set, of the total power emitted for this set, by minimising an overall error criterion per subcarrier with the proviso that the sum of the powers of a set is equal to the product of the number $N_{tg}$ of subcarriers in the subgroup and the average total power emitted on the N subcarriers, **characterised in that**, when distributing the subcarriers into subgroups, those subcarriers that are most affected by a channel disruption are grouped with those that are least affected.

**2.** The transmission method (1) according to the preceding claim, wherein the signal to be transmitted on N subcarriers is emitted by a transmitter (EM), transmitted by a transmission channel (CH) separating the transmitter and a receiver (RE) of the transmitted signal, and wherein the signal $(V_0, ..., V_{N-1})$ to be transmitted is phase-shifted by a phase value that is reciprocal to the phase shift introduced by the transmission channel.

**3.** The transmission method (1) according to one of the preceding claims, wherein the set of subcarriers consists (6) in part of subcarriers selected according to a reference value of the overall error criterion.

**4.** The transmission method (1) according to one of the preceding claims, wherein the minimisation of the overall error criterion is performed using a Lagrangian algorithm.

**5.** The transmission method (1) according to one of the preceding claims, wherein the overall error criterion corresponds to a bit error rate, BER.

**6.** The transmission method (1) according to the preceding claim, wherein the bit error rate is estimated by an exponential function to give an analytical expression of power $P_u$ determined per subcarrier.

**7.** The transmission method (1) according to one of claims 1-4, wherein the overall error criterion corresponds to an overall packet error rate, PER.

**8.** A transmitter (EM) for performing frequency-division multiplexing of a signal to be transmitted on N subcarriers, comprising a module for distributing into subgroups a set of subcarriers taken from the N subcarriers according to a power level of the coefficients of a transmission channel, a power $P_u$ being emitted for each subcarrier in each subgroup, said transmitter comprising a module for determining a set of powers emitted per subgroup that complies with an optimal frequency distribution, among the subcarriers in the set, of the total power emitted for this set, by minimising an overall error criterion per subcarrier with the proviso that the sum of powers of a set is equal to the product of the number $N_{tg}$ of subcarriers in the subgroup and the average total power emitted on the N subcarriers, **characterised in that**, when distributing the subcarriers into subgroups, those subcarriers that are most affected by a channel disruption are grouped by said distribution module with those subcarriers that are least affected.

**9.** The transmitter (EM) according to the preceding claim, wherein the signal to be transmitted on N subcarriers is emitted by said transmitter (EM), transmitted by a transmission channel (CH) separating the transmitter and the receiver (RE) of the transmitted signal, and wherein the signal $(V_0, ..., V_{N-1})$ to be transmitted is phase-shifted by a phase value that is reciprocal to the phase shift introduced by the transmission channel.

**10.** The transmitter (EM) according to claim 8 or 9, wherein the set of subcarriers consists (6) in part of subcarriers selected according to a reference value of the overall error criterion.

**11.** The transmitter (EM) according to one of claims 8-10, wherein the minimisation of the overall error criterion is performed using a Lagrangian algorithm.

**12.** The transmitter (EM) according to one of claims 8-11, wherein the overall error criterion corresponds to a bit error rate, BER.

**13.** The transmitter (EM) according to one of claims 8-11, wherein the overall error criterion corresponds to an overall packet error rate, PER.

**14.** A transmission system (Sy) comprising a transmitter (EM) according to one of claims 8-13.

**15.** A computer programme on an information medium, wherein said programme includes programme instructions suitable for implementing a transmission method according to any one of claims 1-7, when said programme is loaded into and executed from a transmitter.

**Fig. 1**

**Fig. 2**

Fig. 3

Fig. 4

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003043732 A

- EP 1207662 A

**Littérature non-brevet citée dans la description**

- **MING LEI ; PING ZHANG.** Subband Bit and Power Loading for Adaptive OFDM. *Vehicular Technology Conférence, IEEE,* 06 Octobre 2003, ISBN 0-7803-7954-3, 1482-1486